Europäisches Patentamt

European Patent Office

Office européen des brevets

(19)

(11) Numéro de publication: **0.007.847**
**B1**

(12)

# FASCICULE DE BREVET EUROPEEN

(45) Date de publication du fascicule de brevet:
17.02.82

(51) Int. Cl.³: **B 62 D 5/08**

(21) Numéro de dépôt: 79400486.1

(22) Date de dépôt: 10.07.79

(54) **Distributeur rotatif hydraulique, notamment pour mécanismes de direction assistée.**

(30) Priorité: 27.07.78 ES 472087

(43) Date de publication de la demande:
06.02.80 Bulletin 80/3

(45) Mention de la délivrance du brevet:
17.02.82 Bulletin 82/7

(84) Etats contractants désignés:
DE FR GB IT SE

(56) Documents cités:
**DE-A-2 119 395**
**DE-A-2 404 580**
**DE-A1-2 434 604**
**DE-C-1 014 444**
**DE-C-1 101 186**
**DE-U-1 859 518**
**FR-A1-2 372 065**

(73) Titulaire: **BENDIBERICA S.A., Balmès 243,**
**Barcelona 6 (ES)**

(72) Inventeur: **Bacardit, Juan Simon, Calle Mallorca 451 6o 4a**
**A, Barcelona 13 (ES)**

(74) Mandataire: **Huchet, André et al, Service Brevets.**
**Bendix 44, rue François 1er, F-75008 Paris (FR)**

Distributeur rotatif hydraulique, notamment pour mécanismes de direction assistée

La présente invention concerne un distributeur hydraulique rotatif destiné à alimenter un moteur à double effet d'un mécanisme d'assistance, en particulier pour mécanisme de direction assistée.

Les mécanismes de direction assistée comportent un distributeur rotatif ou valve ayant un arbre d'entrée et un arbre de sortie. En fonction de la position angulaire relative de l'arbre d'entrée et de l'arbre de sortie, la valve contrôle l'alimentation en fluide sous pression des compartiments d'un moteur effet à partir d'une source de haute pression et d'un réservoir basse pression. Le fonctionnement de la valve est essentiellement caractérisé par la forme d'une courbe appelée »caractéristique de la valve« qui représente la pression d'actionnement du moteur à double en fonction du couple appliqué à l'arbre d'entrée de la valve. Pour les systèmes de direction assistée, la caractéristique de la valve de distribution a de préférence une allure parabolique. Dans la pratique, cette courbe comporte plusieurs portions linéaires adjacentes avec des pentes de plus en plus grandes au fur et à mesure que la valeur du couple d'entrée augmente. En particulier, la première portion qui correspond sensiblement à la conduite en ligne droite à une pente relativement faible pour des valeurs du couple d'entrée comprises entre zéro et une première valeur prédéterminée.

Le brevet DE-A-1 014 444 décrit des moyens de verrouillage à ressorts, réglables, s'opposant à la rotation relative des éléments du distributeur de part et d'autre d'une position neutre jusqu'à ce que le couple appliqué à l'arbre d'entrée dépasse une valeur prédéterminée.

Pour une valve donnée, il est apparu souhaitable de pouvoir modifier cette valeur prédéterminée selon les souhaits de l'utilisateur, ou en fonction des conditions de conduite du véhicule, de telle sorte que la première portion corresponde à une plage du couple d'entrée plus ou moins grande, et le but de la présente invention est de proposer un distributeur rotatif hydraulique comportant des moyens permettant de modifier selon les désirs de l'utilisateur l'allure de la portion de la caractéristique correspondant à une conduite en ligne droite.

L'invention propose à cet effet un districuteur rotatif hydraulique pour mécanisme de direction assistée comportant un premier organe tournant solidaire en rotation d'un arbre d'entrée, un deuxième organe tournant solidaire en rotation d'un arbre de sortie, lesdits premier et deuxième organes tournants formant entre eux des passages de fluide destinés à contrôler l'écoulement de fluide entre une source de fluide et au moins un compartiment d'un moteur d'assistance en fonction de la position angulaire relative desdits organes tournants et des moyens de verrouillage, sensibles à une pression de contrôle pour s'oposser à la rotation relative entre lesdits organes tournants de part et d'autre d'une position de repos en réponse à l'application d'un couple de rotation à l'arbre d'entrée, jusqu'à ce que ledit couple dépasse une valeur prédéterminée, du type dans lequel une cavité sensiblement en forme de disque est définie à l'intérieur de l'un des organes tournants, caractérisé en ce que l'autre organe tournant est constitué par un élément rotatif en forme d'étoile muni d'une pluralité de branches et monté en rotation à l'intérieur de ladite cavité, en ce que lesdits moyens de verrouillage comprennent au moins paire de chambres de réaction définies par la coopération d'au moins une branche dudit élément rotatif en forme d'étoile avec les parois de ladite cavité et dans lesquelles règne ladite pression de contrôle au voisinage de ladite position de repos, la pression dans l'une des chambres de réaction agissant sur ladite branche pour solliciter l'organe tournant en rotation dans un sens et la pression dans l'autre chambre de réaction agissant sur ladite branche pour solliciter l'organe tournant en rotation dans l'autre sens et en ce que chaque chambre de réaction coopère avec des moyens de décharge pour être mise en communication avec une source de basse pression au-delà d'une rotation relative prédéterminée, dans un sens correspondant, entre les deux organes tournants.

L'invention sera mieux comprise et ses avantages apparaîtront mieux à la lecture de la description qui va suivre et qui se réfère aux dessins annexés, donnés uniquement à titre d'exemple et illustrant deux modes de réalisation d'un distributeur, dans lesquels:

— la figure 1 est une vue en coupe longitudinale (selon la ligne AA de la figure 2) d'un premier mode de réalisation de distributeur hydraulique qui ne fait pas partie de l'invention revendiquée mais permet de comprende son fonctionnement, le verrouillage étant obtenu à l'aide de moyens mécaniques;

— la figure 2 est une vue en coupe transversale selon la ligne 2-2 de la figure 1;

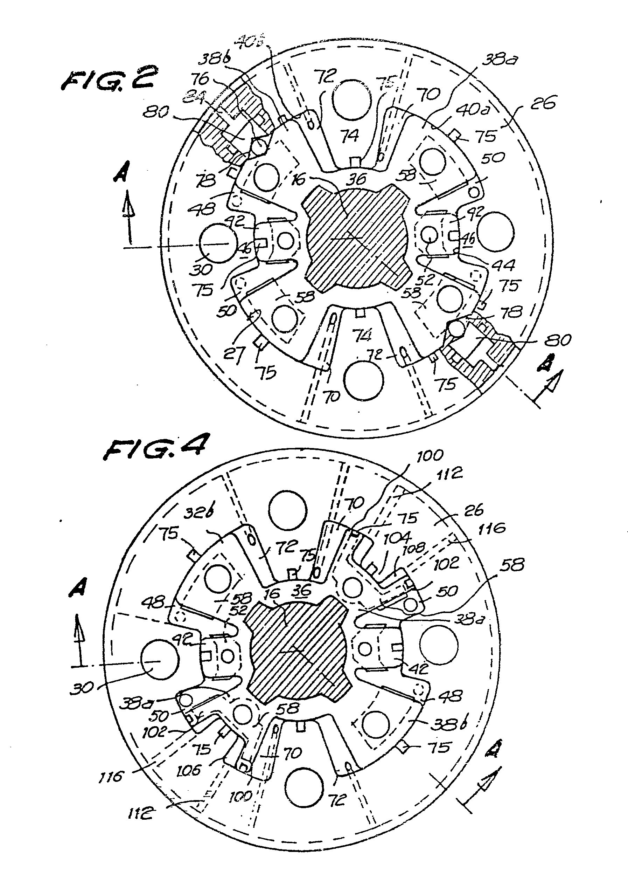

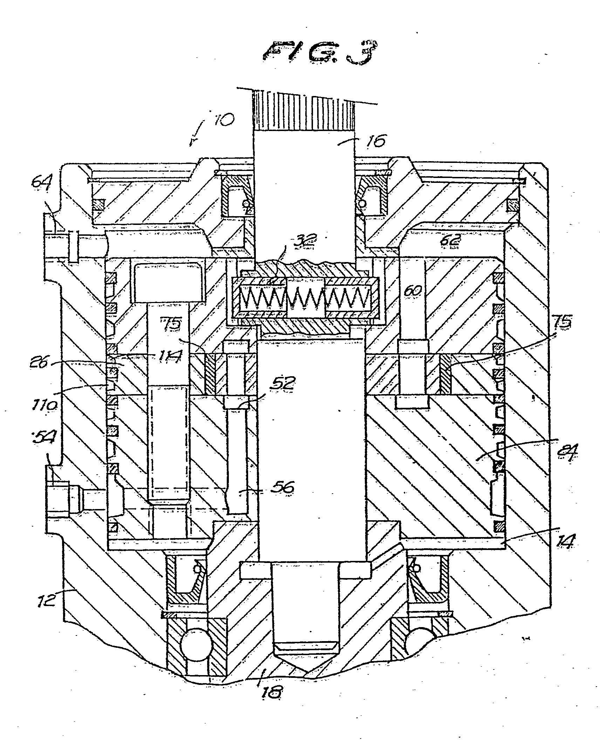

—. la figure 3 est une vue en coupe longitudinale (selon la ligne AA de la figure 4) d'un mode de réalisation de distributeur hydraulique selon la présente invention, dans lequel le verrouillage est obtenu à l'aide de moyens essentiellement hydrauliques; et

— la figure 4 est une vue en coupe transversale du distributeur hydraulique de la figure 3.

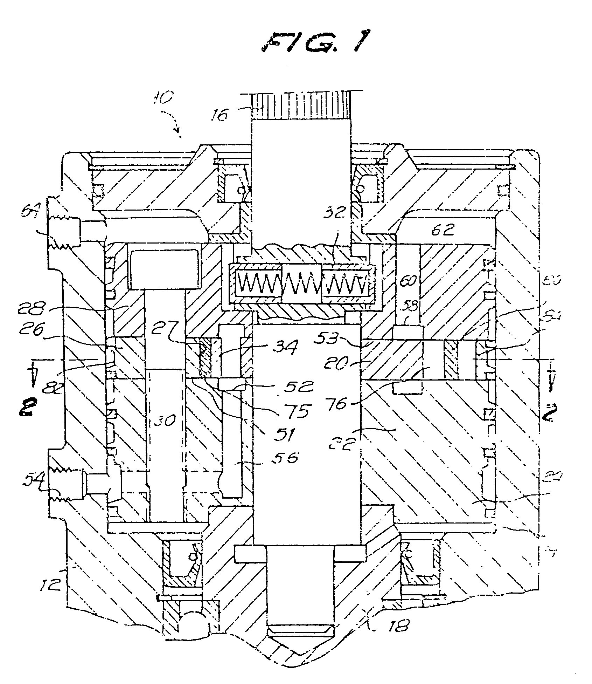

Considérant en premier lieu les figures 1 et 2 on a désigné de façon générale par la référence numérique 10 un distributeur hydraulique rotatif pour mécanisme de direction assistée qui comporte un boîtier 12 à l'intérieur duquel est défini un alésage 14 dans lequel sont disposés un arbre d'entrée 16 et un arbre de sortie 18. L'arbre d'entrée 16 est destiné à être relié à un organe de commandre de direction de véhicule, et l'arbre de sortie 18 est destiné à être relié au mécanisme de direction. Dans l'alésage 14 sont disposés un premier élément tournant 20 solidaire en rotation de l'arbre d'entrée 16 et un deuxième élément tournant 22 solidaire en rotation de l'arbre de sortie 18. Le deuxième élément tournant 22 est constitué par trois pièces annulaires 24, 26, 28 disposées dans cet ordre, coaxiales à l'arbre d'entrée 16 et solidarisées entre elles par des moyens de liaison axiaux 30 tels que des vis ou éléments similaires. Les pièces annulaires 24, 26 et 28 peuvent tourner dans l'alésage 14 et sont montées sur l'arbre 16 des manière à définir un accouplement autorisant un mouvement de rotation limité entre ledit arbre 16 et lesdites pièces annulaires. D'autre part, une liaison élastique est assurée entre l'arbre d'entrée 16 et le deuxième élément tournant 22 par un ressort intermédiaire 32 destiné à assurer un centrage mécanique. La pièce annulaire 26 située entre les pièces 24 et 28 a une portion en forme de couronne, de manière à définir une ouverture centrale limitée par une paroi cylindrique 27. Ainsi, les pièces 24 et 28 et la pièce intermédiaire 26 coopèrent afin de définir une cavité 34 sensiblement en forme de disque traversée selon son axe de symétrie par l'arbre d'entrée 16.

L'organe tournant 20 est monté en rotation dans la cavité 34. Il comporte un noyau central 36 à partir duquel fait saillie radialement vers l'extérieur une pluralité de branches qui coopèrent avec les parois de ladite cavité pour séparer cette dernière de façon étanche en un certain nombre de chambres qui seront décrites plus en détail dans la suite de la description. A partir du noyau central 36 font saillie une première paire de branches 38a diamétralement opposées, et une deuxième paire de branches 38b également diamétralement opposées, et perpendiculaires aux branches 38a. Les branches 38a et 38b présentent des surfaces cylindriques d'extrémité de grand rayon de courbure qui glissent respectivement sur des portions de surface cylindrique en vis à vis 40a et 40b de la paroi cylindrique 27 limitant l'ouverture centrale de la pièce intermédiaire 26. Les branches 38a et 38b et le noyau 36 coopèrent avec les parois de la cavité 34 pour diviser cette dernière en quatre espaces en forme de secteurs. Dans deux de ces espaces diamétralement opposés, des branches 42 (de longueur plus courte que les branches 38a, 38b) font saillie radialement à partir du noyau 36 et comportent chacune une surface d'extrémité de forme cylindrique qui coopère de façon étanche avec une portion de surface cylindrique 44 en vis à vis d'une dent correspondante 46 faisant saillie radialement vers l'intérieur à partir de la pièce annulaire 26. Ainsi chaque bras 42 divise l'espace en forme de secteur dans lequel il pénètre, en une première chambre 48 bordée par les branches 38b et 42, et en une deuxième chambre 50 bordée par les branches 38a et 42. Les chambres 48 et 50 constituent des chambres de travail reliées aux compartiments respectifs d'un moteur hydraulique à double effet.

La face 51 de la pièce 24 qui délimite la cavité 34 comporte des ouvertures 52 qui sont pratiquement recouvertes en totalité par les branches 42 lorsque celles-ci occupent leur position de repos, telle qu'illustrée sur la figure 2. Chaque ouverture 52 est en communication avec une source de haute pression de fluide (non représentée) par l'intermédiaire d'un orifice d'entrée 54 défini dans le boîtier 12, et de passages 56 de la pièce annulaire 24. Néanmoins, lorsque l'organe tournant 20 occupe sa position de repos, les branches 42 sont dans une position angulaire pour laquelle un léger écoulement de fluide est autorisé entre chaque ouverture 52 et les chambres de pression 48 et 50 qui lui sont adjacentes. De la même façon, la face 53 de la pièce annulaire 28 qui délimite la cavité 34 comporte quatre ouvertures 58 qui sont pratiquement recouvertes en totalité respectivement par les branches 38a et 38b. Néanmoins, lorsque l'organe tournant 20 en forme d'étoile occupe sa position de repos, les branches 38a sont dans une position angulaire autorisant un léger écoulement de fluide entre les chambres de pression 50 et les ouvertures recouvertes par lesdites branches 38a. De même, une légère communication de fluide est normalement autorisée entre les chambres de pression 48 et les ouvertures 58 recouvertes par les branches 38b. Les quatre ouvertures 58 sont en communication avec un réservoir basse pression par l'intermédiaire de passages 60 dans la pièce annulaire 28, d'une chambre 62 et d'un orifice de sortie 64 défini dans le corps 12.

Chacun des deux autres espaces en forme de secteur défini entre les branches 38a et 38b et les parois de la cavité 34, est divisé en deux chambres auxiliaires 70, 72 par une dent radiale 74 faisant saillie vers l'intérieur à partir de la pièce 26 pour venir en contact étanche avec la surface extérieure du noyau 36. Chaque chambre auxiliaire 70 est en communication avec une chambre de pression 48 correspondante par l'intermédiaire de passages (non représentés) et d'une première valve de contrôle (non représentée) extérieure au boîtier 12. La première valve de contrôle reste dans une position ouverte tant que la pression dans la chambre 48 est inférieure à une valeur de seuil prédéterminée.

De façon identique, chaque chambre auxiliaire 72 est en communication avec une chambre 50 correspondante par l'intermédiaire d'une seconde valve de contrôle également extérieure au boîtier 12, et qui fonctionne de manière identique à la première valve.

On remarquera également que des joints d'étanchéité 75 sont disposés de manière convenable entre la surface 27 et les surfaces cylindriques d'extrémité des branches afin d'assurer une séparation étanche entre les chambres de la cavité et de faciliter la rotation relative entre les organes tournants 20 et 22.

Le distributeur est également équipé de moyens de verrouillage sensibles à une pression de contrôle pour opposer un couple résistant et empêcher la rotation relative entre les premier et deuxième organes tournants à partir de leur position de repos en réponse à l'application d'un couple de rotation à l'arbre d'entrée, jusqu'à ce que ledit couple appliqué audit arbre déntrée soit supérieur à une valeur limite prédérminée. Les moyens de verrouillage sont constitués par des rouleaux 76 disposés dans des encoches 78 définies dans les surfaces cylindriques constituées par les extrémités des branches 38b et s'étendant selon l'une desdites surfaces cylindriques. Les encoches 78 comportent deux rampes s'intersectant de manière à définir un dièdre, et les rouleaux 76 sont sollicités contre le fond des encoches 78 sous l'influence d'une pression de fluide provenant d'une source de pression indépendante transmise par l'intermédiaire de pistons 80 montés coulissants radialement à l'intérieur de la pièce annulaire intermédiaire 26. La pression de contrôle est transmise au piston 80 par l'intermédiaire d'une gorge annulaire 82 et d'un passage radial 84 prévu dans la pièce annulaire 26. Cette pression peut avoir une valeur fixe déterminée à l'avance ou variable en fonction des conditions de fonctionnement du véhicule.

On notera également que les rouleaux 76 pourraient tout aussi bien être remplacés par des billes sans pour cela sortir du cadre de la présente invention.

Le distributeur représenté sur les figures 1 et 2 fonctionne de la manière suivante: lorsque l'organe tournant 20 est actionné en rotation dans le sens horaire ou dans le sens antihoraire, en réponse à l'application d'un couple de rotation à l'arbre d'entrée, les rouleaux 76 sollicités radialement contre les rampes des rainures 78 sous l'influence de la pression de contrôle qui provient de la source extérieure empêchent la mise en rotation dudit organe tournant jusqu'à ce que le couple appliqué atteigne une valeur de seuil prédéterminée, fonction de la valeur de la pression de contrôle. Lorsque le couple appliqué dépasse cette valeur de seuil, l'organe tournant 20 est mis en rotation dans la cavite 34. En conséquence, tant que le couple appliqué est inférieur à la valeur de seuil (fonction de la pression de contrôle), il n'y a pratiquement pas de pression transmise au moteur à double effet.

Si l'organe tournant 20 est mis en rotation dans le sens horaire, les branches 38b découvrent plus largement les orifices 58 qui leur correspondent tandis que les branches 38a recouvrent davantage les autres orifices 58. D'autre part, les branches 42 coopèrent avec les orifices 52 pour diminuer la section du passage de fluide entre ces derniers et les chambres 48 et pour augmenter la section du passage de fluide entre lesdits orifices 52 et les chambres 50. Bien entendu, les lois de variation des sections desdits passages de fluide peuvent être modulées de manière convenable en prévoyant des chanfreins dans les bords radiaux des ouvertures 52 et 58. Ainsi, lorsque l'organe tournant 20 entre en rotation dans le sens horaire, une haute pression s'établit dans les chambres 50 et 72 tandis qu'une basse pression s'établit dans les chambres 48 et 70. Etant donné la différence des surfaces radiales des branches 38a et 42, l'organe tournant est alors soumis à un couple de réaction résultant de la haute pression dans les chambres 50 et 72. Dans un premier temps, l'augmentation de pression est transmise aux chambres 50 et 72 et le couple de réaction augmente à un premier taux prédéterminé en fonction de la haute pression. Lorsque la haute pression dépasse la valeur de seuil prédéterminée ci-dessus mentionnée, la deuxième valve de contrôle ferme la communication de fluide entre les chambres 50 et les chambres 72. La pression dans ces dernières cesse d'augmenter, et l'augmentation du couple de réaction ne résulte plus que de l'augmentation de la pression dans les chambres 50, et s'effectue à un deuxième taux prédéterminé. A cette modification du taux de variation du couple de réaction à partir d'une valeur donnée de la haute pression, correspond un changement de pente entre les deuxième et troisième portions de la courbe caractéristique correspondant respectivement à la conduite dans les virages et à la conduite en manoeuvre de stationnement. Le changement de pente s'effectue pour une valeur du couple d'entrée qui est fonction de la pression de coupure des valves de contrôle.

Si l'organe tournant 20 est mis en rotation dans le sens anti-horaire, le distributeur fonctionne de manière symétrique, la haute pression de fluide étant transmise aux chambres 48 et 70 tandis que la basse pression est transmise aux chambres 50 et 72.

Si l'on considère maintenant les figures 3 et 4, on y voit un distributeur rotatif sensiblement identique à celui des figures 1 et 2, à l'exception des moyens de verrouillage qui sont obtenus ici de manière hydraulique. Les éléments identiques à ceux des figures 1 et 2 sont désignés par les mêmes références numériques. Chaque branche 38a de l'organe tournant se termine par deux doigts radiaux 100, 102 constituant une sorte de fourche. Dans la cavité 34, des dents 104 font saillie radialement à partir de la pièce annulaire 26 entre chaque paire de doigts 100, 102 pour venir coopérer de façon étanche avec la branche 38a et séparer l'espace de la cavité 34 compris entre les deux doigts en une première et une deuxième chambres de réaction 106 et 108. Chaque chambre de réaction est normalement soumise à une pression de contrôle provenant d'une source extérieure par l'intermédiaire d'un diviseur de débit. De manière plus détaillée, les chambres 106 reçoivent la pression de contrôle par l'intermédiaire d'une gorge annulaire 110 et de passages 112 de la pièce annulaire 26. De la même manière, les chambres 108 reçoivent la pression de contrôle par l'intermédiaire d'une autre gorge annulaire 114 et de passages 116. Les ouvertures 58 ont ici une forme adaptés à la forme des doigts 100 et 102 de telle sorte que ces derniers recouvrent lesdites ouvertures afin d'empêcher toute communication de fluide entre les chambres de réaction 106 et 108 et l'orifice basse pression 64.

Les pressions qui règnent dans les chambres de réaction 108 et 106 sollicitent respectivement l'organe tournant 20 dans le sens horaire et dans le sens anti-horaire de manière à créer un équilibre lorsque l'organe tournant occupe sa position de repos.

En réponse à l'application d'un couple d'entrée à l'arbre 16, l'organe tournant est commandé en légère rotation de telle sorte que l'une des chambres 106 ou 108 est mise en communication avec la source de basse pression par l'intermédiaire de l'orifice 58 qui est alors découvert par l'un des doigts 100 ou 102. La différence de pression ainsi créée entre les chambres de réaction oppose un couple résistant à l'actionnement de l'organe tournant 20. Quand le couple d'entrée a atteint une valeur prédéterminée, le couple de réaction, fonction de la pression de contrôle, n'est plus suffisant pour s'opposer à la rotation de l'organe tournant et le distributeur fonctionne alors de la même façon que celui qui a été décrit en se référant aux figures 1 et 2.

Bien que dans le mode de réalisation présentement décrit, le distributeur constitué par les chambres 48 et 50 coopérant avec les ouvertures 52 et 58 et les branches 38a et 38b, soit du type à centre ouvert, on conçoit que l'invention pourrait également être mise en oeuvre dans le cas d'un distributeur hydraulique à centre fermé. Dans ce cas, lorsque l'organe tournant occupe sa position de repos, les branches 38a et 38b recouvriraient totalement les orifices basse pression 58 et les branches 42 recouvriraient totalement les orfices haute pression 52.

## Revendications

1. Distributeur rotatif hydraulique pour mécanisme de direction assistée comportant un premier organe (20) tournant solidaire en rotation d'un arbre d'entrée (16), un deuxième organe tournant (22) solidaire en rotation d'un arbre de sortie (18), lesdits premier et deuxième organes tournants formant entre eux des passages de fluide destinés à contrôler l'écoulement de fluide entre une source de fluide et au moins un compartiment d'un moteur d'assistance en fonction de la position angulaire relative desdits organes tournants et des moyens de verrouillage, sensibles à une pression de contrôle pour s'opposer à la rotation relative entre lesdits organes tournants de part et d'autre d'une position de repos en réponse à l'application d'un couple de rotation à l'arbre d'entrée (16) jusqu'à ce que ledit couple dépasse une valeur prédéterminée, du type dans lequel une cavité (34) sensiblement en forme de disque est définie à l'untérieur de l'un des organes tournants (22), caractérisé en ce que l'autre organe tournant (20) est constitué par un élément rotatif en forme d'etoile muni d'une pluralité de branches (38a, 38b) et monté en rotation à l'intérieur de ladite cavité (34), en ce que lesdits moyens de verrouillage comprennent au moins une paire de chambres de réaction (106, 108) définies par la coopération d'au moins une branche (38a) dudit élément rotatif en forme d'étoile avec les parois de ladite cavité et dans lesquelles règne ladite pression de contrôle au voisinage de ladite position de repos, la pression dans l'une des chambres de réaction agissant sur ladite branche pour solliciter l'organe tournant en rotation dans un sens et la pression dans l'autre chambre de réaction agissant sur ladite branche pour solliciter l'organe tournant en rotation dans l'autre sens et en ce que chaque chambre de réaction (106, 108) coopère avec des moyens de décharge (58) pour être mise en communication avec une source de basse pression au-delà d'une rotation relative prédéterminée, dans un sens correspondant, entre les deux organes tournants (20, 22).

2. Distributeur rotatif hydraulique selon la revendication 1, caractérisé en ce que la branche de l'organe rotatif (20) soumise à l'action de la pression dans les chambres de réaction de chaque paire recouvre normalement un passage (58) en communication avec la source de basse pression pour interdire toute communication de fluide entre cette dernière et lesdites chambres de réaction de ladite paire, ledit, passage étant susceptible d'être découvert en réponse à la rotation de l'organe rotatif pour évacuer le fluide sous pression dans l'une des chambres de réaction vers ladite source de basse pression.

3. Distributeur rotatif hydraulique selon l'une quelconque des revendications 1 ou 2 caractérisé en ce que les chambres de réaction sont alimentées à partir d'une source de pression indépendante par l'intermédiaire d'un diviseur de débit.

## Patentansprüche

1. Hydraulisches Drehschieberventil zur Verwendung in einer Servolenkung, mit einem drehfest mit einer Eingangswelle (16) verbundenen ersten Steuerteil (20), mit einem drehfest mit einer Ausgangswelle (18) verbundenen zweiten Steuerteil (22), welches zusammen mit dem ersten Steuerteil (20) Druckmittel-Steuerkanäle vorgibt, durch welche der Strom von fluidischem Arbeitsmittel zwischen einer Druckmittelquelle und mindestens einem Arbeitsraum eines Lenkhilfenmotors in Abhängigkeit von der winkelmäßigen Relativstellung der beiden Steuerteile zueinander gesteuert wird, und mit einer Verriegelungseinrichtung, welche bei Beaufschlagung mit einem Steuerdruck einer Relativverdrehung zwischen den drehbaren Steuerteilen (20, 22) aus einer Ruhestellung heraus in beiden Richtungen dann, wenn ein Drehmoment auf die Eingangswelle (16) ausgeübt wird, so lange entgegenwirkt, bis dieses Drehmoment einen vorgegebenen Wert überschreitet, wobei im Inneren eines der Steuerteile (22) ein im wesentlichen scheibenförmiger Hohlraum (34) ausgebildet ist, dadurch gekennzeichnet, daß das andere Steuerteil (20) als sternförmiges drehbares Teil mit einer Vielzahl von Armen (38a, 38b) ausgebildet ist und drehbar in dem Hohlraum (34) angeordnet ist, daß die Verriegelungseinrichtung zumindest ein Paar von Reaktionskammern (106, 108) aufweist, welche jeweils durch mindestens einen Arm (38a) des sternförmig ausgebildeten Steuerteils (20) zusammen mit den Wänden des Hohlraumes (34) begrenzt sind und in welchen in der Nachbarschaft der Ruhestellung der Steuerdruck herrscht, wobei der in der einen Reaktionskammer herrschende und auf den betrachteten Arm einwirkende Druck das Steuerteil in der einen Richtung zu drehen sucht und der in der anderen Reaktionskammer herrschende und auf den betrachteten Arm einwirkende Druck das Steuerteil in die entgegengesetzte Richtung zu drehen versucht, und daß eine jede der Reaktionskammern (106, 108) mit einer Druckentlastungseinrichtung (58) zusammenarbeitet, um mit einer Niederdruckquelle verbunden zu werden, wenn in der zugeordneten Drehrichtung eine vorgegebene Relativdrehung zwischen den Steuerteilen (20, 22) überschritten wird.

2. Drehschieberventil nach Anspruch 1, dadurch gekennzeichnet, daß der Arm des anderen Steuerteils (20), der dem Druck in den Reaktionskammern eines jeden Paares ausgesetzt ist, normalerweise einen Kanal (58) überdeckt, der mit der Niederdruckquelle in Verbindung steht, wodurch jegliche Strömungsmittelverbindung zwischen der Niederdruckquelle und den Reaktionskammern des betrachteten Paares unterbrochen wird, wobei dieser Kanal bei Verdrehen des drehbaren Steuerteiles freigegeben werden kann, um das unter Druck in der einen der Reaktionskammern befindliche Arbeitsmittel zu der Niederdruckquelle abzuleiten.

3. Drehschieberventil nach Anspruch 1 oder 2, dadurch gekennzeichnet, daß die Reaktionskammern von einer unabhängigen Druckmittelquelle her unter Verwendung eines Mengenteilers gespeist werden.

**Claims**

1. Hydraulic rotary distributor for power steering system comprising a first rotary member (20) rotably connected to an input shaft (16), a second rotary member (22) rotatably connected to an output shaft (18), said first and second rotary members defining therebetween fluid passages to control fluid flow between a fluid source and at least one chamber of a power assisting motor as a function of the relative angular position between said rotary members and locking means responsive to a monitoring pressure to counteract to the relative rotation between said rotary members on both sides from a rest position as a response to a rotation torque applied to said input shaft up to said torque exceeds a predetermined value, of the type in which a substantially disc-shaped cavity (34) is defined inside one rotary member (22), characterized in that the other rotary member (20) is made of a star-shaped rotary element having a plurality of branches (38a, 38b) and rotatably mounted inside said cavity (34), in that said locking means comprise at least a pair of reaction chambers (106, 108) defined by the cooperation of at least one branch (38a) of said star-shaped rotary element with walls of said cavity and in which is established said monitoring pressure in the vicinity to said rest position, the pressure in one of the reaction chambers acting on that branch to urge the rotary member in one direction and the pressure in the other reaction chamber acting on the same branch to urge the rotary member in the other direction, and in that each reaction chamber (106, 108) cooperates with drain means (58) to be connected to a low pressure source beyond a predetermined relative rotation, in a corresponding direction between said two rotary members (20, 22).

2. Hydraulic rotary distributor according to claim 1, characterized in that said branch of the rotary member (20) subjected to pressure action in said reaction chambers of each pair normally covers a passage (58) communicating with said low pressure source to impede fluid communication between the latter and said reaction chambers of said pair, said passage being capable to be uncovered in response to the rotation of the rotary member to evacuate fluid under pressure in one of said chambers towards said low pressure source.

3. Hydraulic rotary distributor according to claim 1 or 2, characterized in that said reaction chambers are fed by an independent pressure source through a flow divider.

FIG. 1

0 007 847

7

FIG. 2

FIG. 4

# FIG.3